Europäisches Patentamt

European Patent Office

Office européen des brevets

(19)

(11) EP 1 251 702 A2

(12) **EUROPEAN PATENT APPLICATION**

(43) Date of publication:
23.10.2002 Bulletin 2002/43

(51) Int Cl.⁷: **H04N 7/26**

(21) Application number: 02252694.1

(22) Date of filing: 16.04.2002

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **19.04.2001 KR 2001021122**

(71) Applicant: **SAMSUNG ELECTRONICS CO., LTD.**
**Suwon-City, Kyungki-do (KR)**

(72) Inventors:
• **Jeon, Jong-gu, 508-1304 Shinnamushil Jugong
Suwon-si, Gyeonggi-do, Korea (KR)**

• **Kim, Yong-je,
425-104 Cheongmyung Maeul Kunyoung
Suwon-si, Gyeonggi-do, Korea (KR)**
• **Kang, Sang-ug, 106-901 Indeokwon Samsung
Anyang-si, Gyeonggi-do, Korea (KR)**
• **Suh, Jung-wook
Seocho-gu, Seoul, Korea (KR)**

(74) Representative: **Geary, Stuart Lloyd et al
Venner, Shipley & Co.,
20 Little Britain
London EC1A 7DH (GB)**

(54) **Video encoding and decoding**

(57)    A video pre-processing/post-processing apparatus which is capable of stably operating at a high speed with a minimum memory using a new hardware-software cooperation method, and a method used by the apparatus are provided. The video pre-processing method for capturing video efficiently includes the steps of assigning numbers to a plurality of memory regions in order and circularly increasing the numbers in response to a frame synchronizing signal, checking the storing memory regions in response to the frame synchronizing signal and capturing input video data, and storing the captured video data in the memory regions in a predetermined order. The video post-processing method for displaying video efficiently includes the steps of assigning numbers to a plurality of memory regions in order and circularly increasing the numbers in response to a frame synchronizing signal, displaying the memory regions in response to a video synchronizing signal, checking the displayed memory regions, and storing video data in the memory regions in a predetermined order, and sequentially displaying the video data stored in the memory region.

FIG. 3

## Description

The present invention relates to:-

a video encoding method comprising cyclically storing video frames in a plurality of memory regions, and repeatedly performing a video encoding process on video data in said memory regions;
a video encoding apparatus comprising a video signal input, memory, video storing means for cyclically storing video frames from said video signal input in a plurality of regions of said memory and encoding means for repeatedly performing a video encoding process on video data in said regions;
a method of decoding an encoded video signal, the method comprising cyclically storing encoded video frames in a plurality of memory regions, repeatedly performing a video decoding process on encoded video data in said memory regions and outputting decoded video frames in synchronism with a frame synchronising signal; and
an apparatus for decoding an encoded video signal, the apparatus comprising a video signal input, memory, video storing means for cyclically storing encoded video frames in a plurality of memory regions, decoding means for repeatedly performing a video decoding process on encoded video data in said memory regions and outputting decoded video frames in synchronism with a frame synchronising signal.

In general, video data input to a camera is stored in a memory in response to a capture command for encoding the video data. Since display devices typically process a maximum 30 frames per second, it takes a minimum of 33 milliseconds (ms) to process one frame. Thus, a hardware unit generates a vertical synchronizing (Vsync) signal for indicating the possibility of capture every 33 ms, and a software unit causes the sending of a capture command and a memory address to the hardware unit whenever the Vsync is generated. Subsequently, the hardware unit stores the video data captured in response to the capture command in the memory.

Also, video data that is decoded by a software-implemented decoder is typically stored in a predetermined region of a memory and displayed on a display device such as a liquid crystal display (LCD). Whenever the memory is updated, the software unit causes the sending of updated information and regions of the updated memory to the display device. In this way, two or more memories are usually used to store the video data during encoding and decoding processes, and the memory is referred to as a ping-pong memory.

Presently, there are two methods for capturing and encoding an image input from a camera or displaying video data. These are an interrupt method and a polling method.

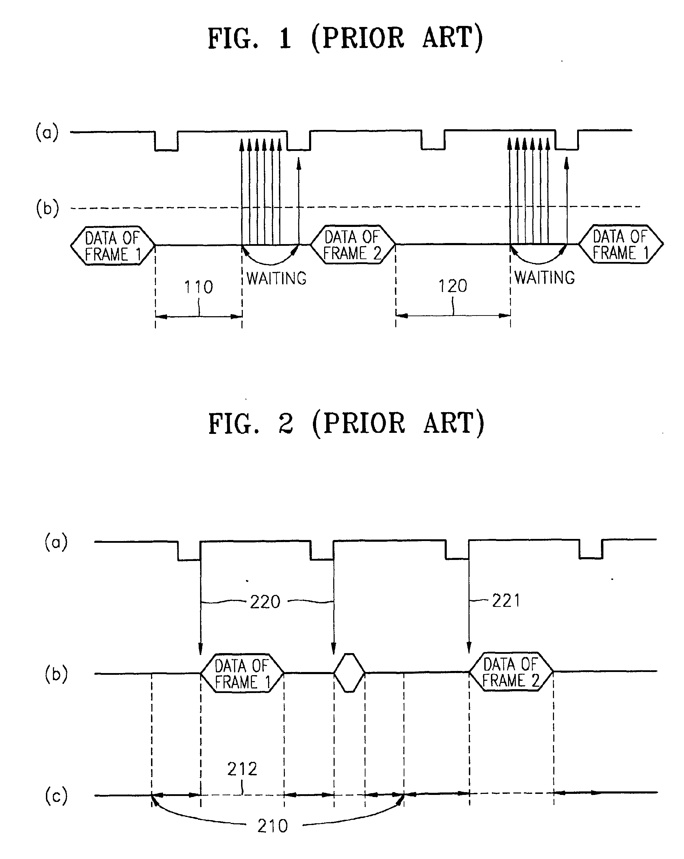

The polling method will now be described with reference to Figure 1.

As shown in Figure 1, a software unit (b) for encoding checks the state of a hardware unit (a) for camera capture and waits for a vertical synchronizing (Vsync) signal after encoding data of a frame (see intervals 110 and 120), and then, if the software unit (b) receives the Vsync signal from the hardware unit (a), a capture command for data of frames 1 and 2 is transmitted. However, the state of the hardware unit (a) must be continuously checked in the polling method, and thus overall speed is greatly decreased.

The interrupt method will be described with reference to Figure 2. As shown in Figure 2, a vertical synchronization signal (a) generates an interrupt 220 immediately when software unit (b) requires data, stops routine operations of the software unit (b) for a short time, and forcibly causes the software unit (b) to transmit information required for capturing data of frame 1 to the hardware unit. When the interrupt is generated, the software unit (b) performs an interrupt service routine (ISR).

Assuming that only two ping-pong memories are used, if the software unit receives an interrupt signal 220 while encoding frame 2 (see interval 210 of (c)), the software unit stops encoding for a short time (see interval 212 of (c)), transmits information required for capturing data of frame 1 to the hardware unit, and then restarts encoding frame 2. If another interrupt signal 221 is received even though encoding of frame 2 is not complete, the software unit does not give a capture command for frame 2 but escapes from the ISR and performs encoding of frame 2 continuously.

If the software unit receives an interrupt signal 220 while decoding frame 2 (see interval 210 of (c)), the software unit stops decoding frame 2 for a short time (see interval 212 of (c)), transmits information required for reading the data of frame 1 to the hardware unit (a), and then restarts decoding of frame 2. If another interrupt is received even though decoding of frame 2 is not complete, the software unit does not give a read command for frame 2 but escapes from the ISR and performs decoding of frame 2 continuously.

Thus, in the interrupt method, if an interrupt is generated, encoding and decoding are immediately performed without waiting for a Vsync signal, and thus, the interrupt method is faster than the polling method.

However, if the interrupts are generated frequently, pipelining cannot be used in a reduced instruction set computer (RISC) processor, and thus overall speed is decreased. In particular, although any one given type of interrupt for one particular purpose is not used frequently in a system, various types of interrupts are used together in the system. Various types of interrupts, for example, an interrupt for a camera, an interrupt for an LCD, an interrupt for a LAN, and an interrupt for a universal asynchronous receiver/transmitter (UART) port, are used together in the system, and the camera and the LCD generate an interrupt every 33 ms. Thus, various types of interrupts are used together in a system using a conventional interrupt method, and thus, overall speed and stability in the system are decreased.

Also, in the conventional polling and interrupt methods, the decoding time of software unit is not fixed, and thus, video data is processed unstably. That is, in a case where all available memory regions are used even though the decoding time of consecutive frames is so short that all image data are not displayed on a display device, video data decoded after that must be discarded. This causes the video to appear jerky or resources of an encoder or decoder to be used unnecessarily.

A video encoding method according to the present invention is characterised in that the video encoding process is performed substantially continuously, an index identifying the currently used memory region is updated in dependence on a frame synchronising signal associated with the video frames being stored in said memory regions and, at the end of each performance of said encoding process, one of said memory regions is selected to provide data for the next performance of said encoding process in dependence on the current value of said index.

A video encoding apparatus according to the present invention is characterised in that the encoding means is configured such that the video encoding process is performed substantially continuously, the video storing means is configured to update an index, identifying the currently used memory region, in dependence on a frame synchronising signal associated with the video frames being stored in said memory regions and the encoding means is configured such that, at the end of each performance of said encoding process, one of said memory regions is selected to provide data for the next performance of said encoding process in dependence on the current value of said index.

Preferably, the number of memory regions is greater than two. More preferably, said index (MP) is in the range 0 to N - 1, where N is the number of memory regions, and the index (sw_cnt) of the memory region to provide data for the next performance of said encoding process is determined in accordance with:

$$sw\_cnt = (MP+N - 1) \text{ modulo } N$$

Thus, the present invention provides a video encoding apparatus and method which are capable of stable operation at a high speed with a small amount of memory.

A video decoding method according to the present invention is characterised in that an index identifying the memory region into which an encoded video frame is being written is updated in dependence on said frame synchronising signal and, after each performance of said decoding process, one of said memory regions is selected to provide data for the next performance of said decoding process in dependence on the current value of said index, the decoding process being held off, if the index has not changed since the start of the last performance of the decoding process.

An video decoding apparatus according to the present invention is characterised in that the video storing means is configured to update an index, identifying the memory region into which an encoded video frame is currently being written, in dependence on said frame synchronising signal, and the decoding means is configured such that, after each performance of said decoding process, one of said memory regions is selected to provide data for the next performance of said decoding process in dependence on the current value of said index, the decoding process being held off, if the index has not changed since the start of the last performance of the decoding process.

Thus, the present invention provides a video decoding apparatus and method which are capable of stable operation at a high speed with a small amount of memory.

Additional preferred and optional features are set out in claims 9 to 38 appended hereto.

Embodiments of the present invention will now be described, by way of example, with reference to Figures 3 to 14 of the accompanying drawings, in which:-

Figure 1 is a timing diagram illustrating a conventional polling method for capturing/displaying video;

Figure 2 is a timing diagram illustrating a conventional interrupt method for capturing/displaying video;

Figure 3 is a block diagram illustrating an embodiment of a video pre-processing apparatus according to the present invention;

Figure 4 illustrates the structure of a memory for capturing video data;

Figure 5 is a timing diagram illustrating a video pre-processing method according to the present invention;

Figure 6 is a flowchart illustrating the video pre-processing method according to the present invention;

Figure 7 is a timing diagram form Y, U, and V data;

Figure 8 is a timing diagram of video data which are input in units of frames;

Figure 9 is a timing diagram illustrating control of the memory of Figure 4;

Figure 10 is a block diagram illustrating an embodiment of a video post-processing apparatus according to the present invention;

Figure 11 illustrates the structure of a memory for displaying video data;

Figure 12 is a timing diagram illustrating a video post-processing method according to the present invention;

Figure 13 is a flowchart illustrating the video post-processing method according to the present invention; and

Figure 14 is a timing diagram illustrating control of the memory of Figure 11.

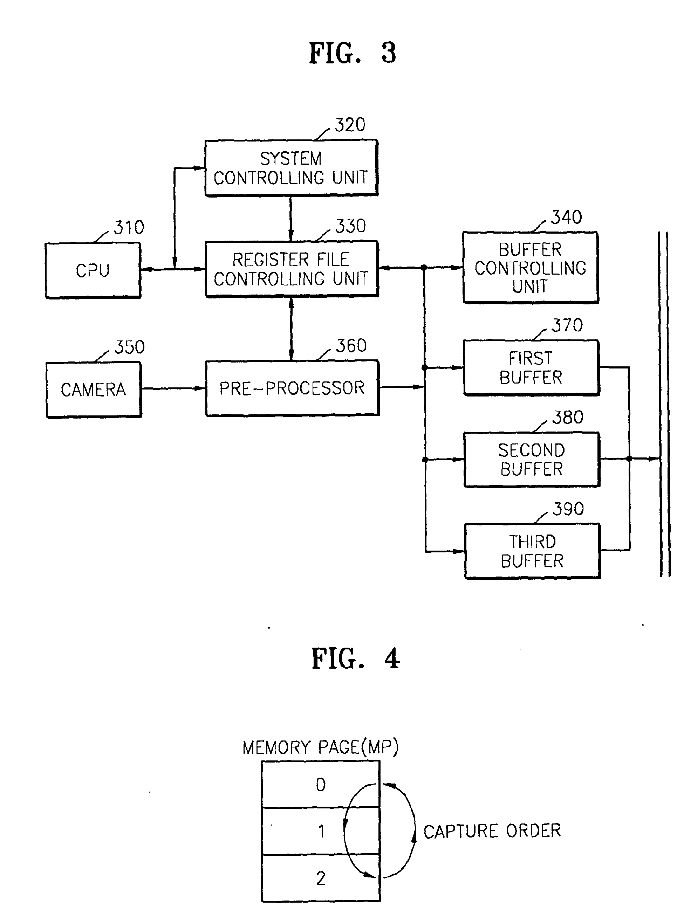

Referring to Figure 3, a central processing unit (CPU) 310 executes software. The software controls the operation of a hardware unit (not shown) by a register file.

A system controlling unit 320 transmits a control command of the central processing unit (CPU) 310 to the hardware unit. If the CPU 310 writes operation data into a register file (not shown), the system controlling unit 320 interprets the operation data, thereby performing a command of the software unit according to a predetermined protocol.

A register file controlling unit 330 controls the register file which is received from the CPU 310 in response to a control command of the system controlling unit 320 and the stipulated protocol. Also, the register file controlling unit 330 controls the register file according to a vertical synchronizing (Vsync) signal and interprets each bit of the register file.

A buffer controlling unit 340 buffers data, which is input at fixed times separated by a predetermined interval, in a buffer such as a synchronous dynamic random access memory (SDRAM).

A camera 350 outputs video data, vertical synchronizing (Vsync) and horizontal synchronizing (Hsync) signals to a pre-processor 360.

The pre-processor 360 converts input 4:2:2 video data into 4:2:0 video data. That is, the pre-processor 360 subsamples the video data in a vertical direction.

First, second, and third buffers 370, 380, 390 store a signal Y, a signal $C_b$, and a signal $C_r$, which are input from the pre-processor 360, respectively. The buffer size can be varied according to the structure of the system.

Referring to Figure 4, a hardware unit divides a memory into a plurality of memory pages during initializing, sets an address for each memory page and stores video in the memory pages automatically according to a predetermined order when a capture command is received from the software unit. The memory pages are numbered 0 to 2 on the basis of their capture order, but may be increased in the case of parallel processing or applications.

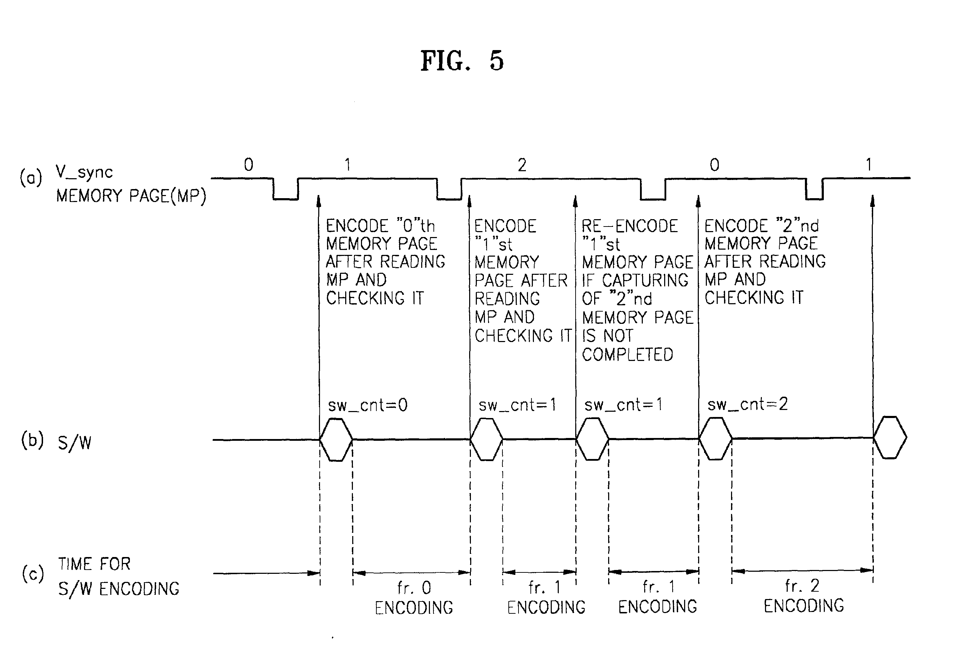

Referring to Figure 5, (a) is a timing diagram of a V_sync signal or a frame synchronizing signal that is generated from hardware unit, and a memory page (MP) is cycled in the order of "0 → 1 → 2 → 0 ... " in response to the V_sync signal. The MP is a memory region in which the captured data are stored for one V_sync signal cycle while a camera begins capturing and finishes capturing. The hardware unit operates as a slave of the software unit for memory control and checks via a register whether an image has been captured.

(b) is a timing diagram illustrating control performed in by software unit. The software unit reads a memory page and gives a capture command. Software unit count value sw_cnt, representing a memory page to be encoded, is calculated using (MP+2) modulo 3 after the memory page is read in response to a V_sync signal, and is updated in the order of "0 → 1 → 1 → 2 ... ".

Referring to the timing diagram (b), the current memory page is read and a capture command is given, and a "0"th memory page corresponding to (MP+2) modulo 3 is encoded if the memory page is determined to be a "1"th memory page (sw_cnt = 0). Subsequently, the next memory page is read and a capture command is given, and a "1"th memory page corresponding to (MP+2) modulo 3 is encoded if the memory page is determined to be a "2"th memory page (sw_cnt = 1). Subsequently, when the next memory page is read after the "1"th memory page is encoded, if capturing of the current memory page "2" is not complete, a previously captured frame is reused (sw_cnt = 1). However, reuse of the previously captured frame depends on the developer.

(c) is a timing diagram illustrating encoding performed by software unit. The software unit controls a hardware unit to encode data stored in a memory page of (MP+2) modulo 3 in accordance with a calculated value of the software unit counter. If the memory page read by the software unit is being captured, an identical frame is re-encoded (fr. 1 encoding), and if not, the captured memory page is encoded (fr. 0 encoding and fr. 2 encoding).

A pre-processing method according to the present invention and will now be described.

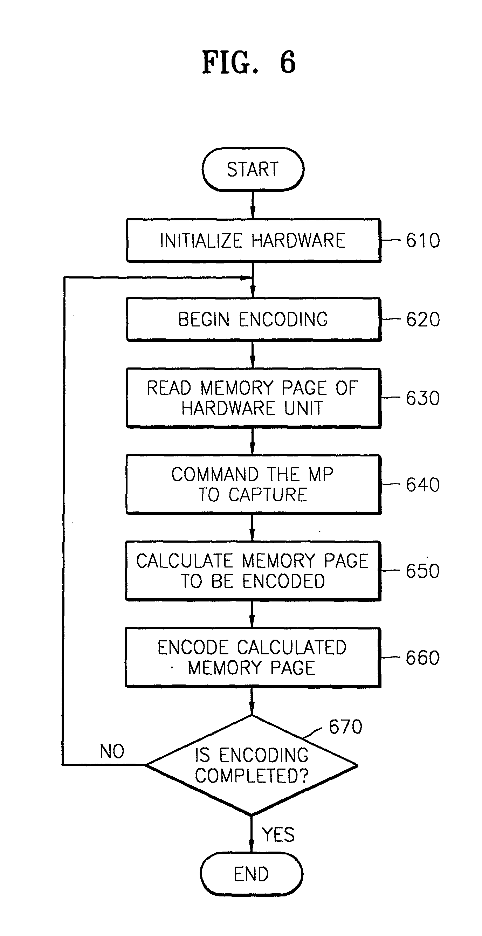

Referring to Figure 6, in step 610, the hardware unit of the system is initialized and then, in step 620, the hardware unit begins encoding.

In step 630, a software unit reads a memory page (MP).

In step 640, the software unit checks the memory page (MP) and gives a capture command to the MP.

In step 650, the software unit calculates a memory page sw_cnt to be encoded using (MP+2) modulo 3.

In step 660, the software unit encodes the calculated memory page sw_cnt.

In step 670, it is determined whether encoding is complete, and if encoding is complete, pre-processing is ended. If not, the software unit performs pre-processing by reading the memory page again.

In another embodiment, in the case where parallel processing is performed in each encoding step, the number of regions of memory required is increased. For example, if the number to be parallel processed is $N_p$, the number of a required memory page (MP) is ($N_p$ +2). In such a case, if the number of parallel processes is two of ME/MC and DCT, four memory pages (MPs) are required, and a memory page to be encoded is numbered (MP+3) modulo 4.

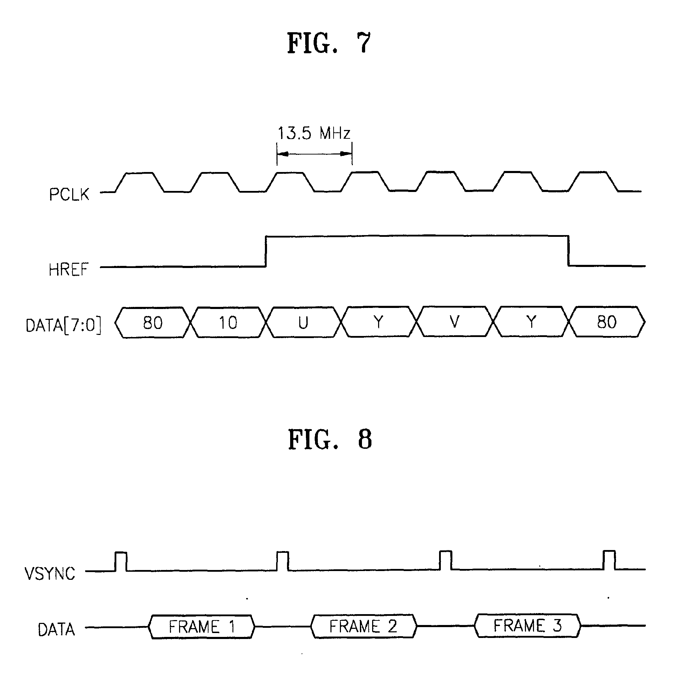

Referring to Figure 7, the CPU 310 supports encoding in units of frames. Thus, Y, $C_b$, and $C_r$, which are input to a camera, support a capture function in units of frames.

The input video data is input in units of frames in synchronism with vertical synchronizing signal. In an embodiment of the present invention, the camera is a CCIR 601 format apparatus and a QCIF (176 x 144) progressive scan method is used. The input video data is 8-bit Y, U, and V data, and a 13.5 MHz clock signal PCLK is input to the system, and 8-bit data DATA[7:0] is output in response to a synchronized clock signal.

Referring to Figure 8, input video data DATA can be input at a maximum rate of 60 frames per second. Processing of the video data DATA depends on the capacity of an encoder. Thus, the hardware unit operates as a slave of the CPU 310 and selects an frame for encoding. Since the frames of the input data are delimited by an input vertical synchronizing signal VSYNC, the hardware unit selects data to be encoded in response to the VSYNC.

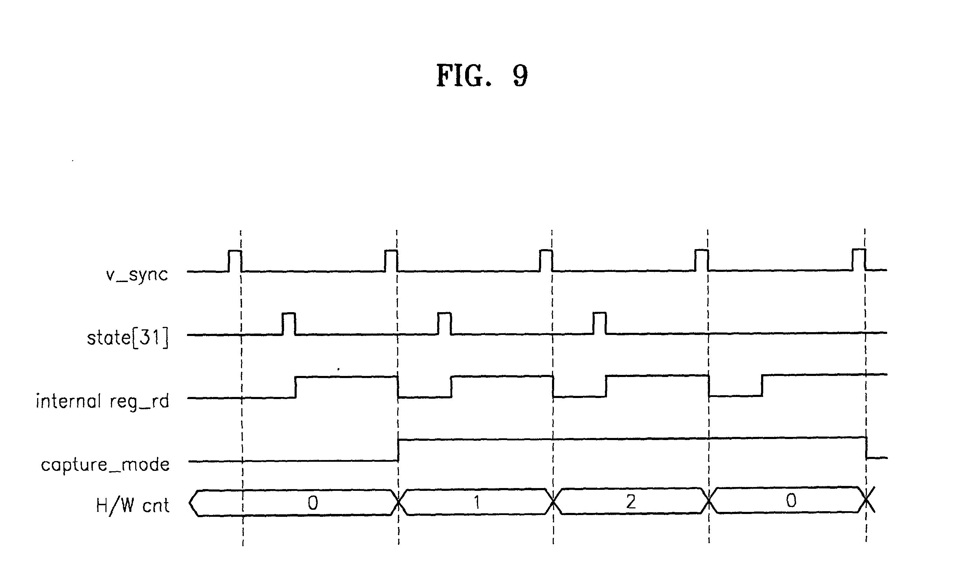

Referring to Figure 9, video data is input from a camera in response to vertical synchronizing signal v_sync and is captured as required by the CPU 310. The CPU 310 captures the video data using a register file. A capture command is transmitted to the register file using a status register. If a state bit state[31] is set to "1", the video data is captured. Other set bits in the status register represent the index numbers 0, 1, and 2 of three memories which are being used in the hardware unit, as shown in Figure 4. The CPU 310 reads the memory number and causes the sending of a memory region to be processed to the software unit.

More specifically, if a predetermined state bit state[31] of the status register is set for a frame to be captured by the CPU 310, an internal register read signal internal reg_rd in the hardware unit is set to "1". In this case, when the vertical synchronizing signal v_sync is received, the internal register read signal internal reg_rd is changed into "0". If the internal register read signal internal reg_rd is set to "0" and simultaneously capture bits are set in the status register, the video data is captured. Subsequently, if the capture bits are not set in the status register at the next vertical synchronizing signal v_sync, capture is enabled. As a result, the capture bits of the status register are checked at each vertical synchronizing signal v_sync. In the case where the data is captured in the hardware unit, the starting address of the set memory is stored in the CPU 310 after booting, and the value of the starting address is effective until the set address value varies. The CPU 310 generates the starting address in units of the v_sync through a register. The number of memory regions H/W cnt is cycled in the order of "0 → 1 → 2 → 0 " if the data are captured for each v_sync.

A post-processing appratus will now be described.

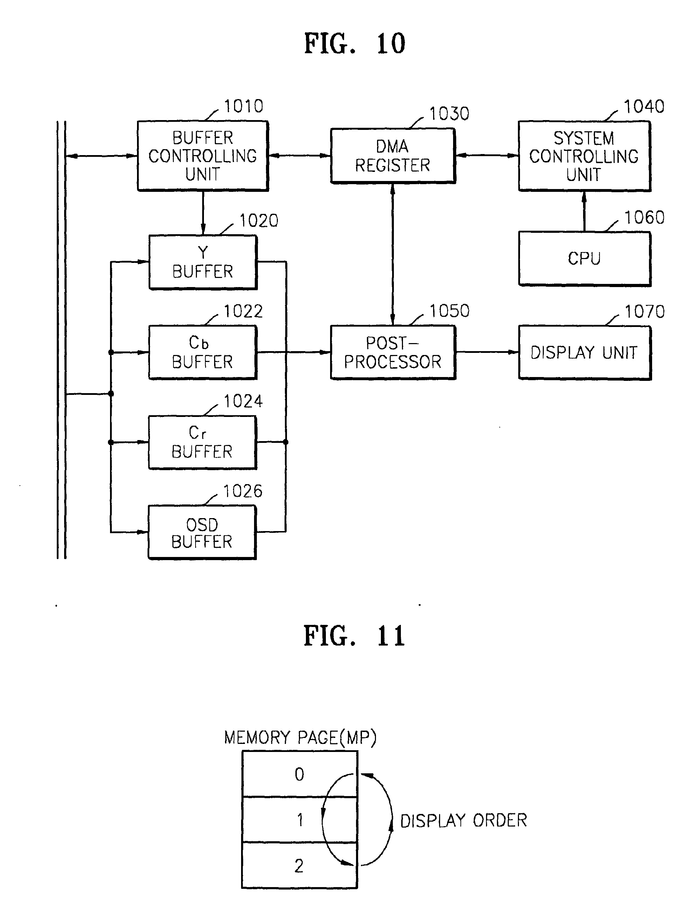

Referring to Figure 10, data decoded in a source codec unit (not shown) is stored in a Y buffer 1020, a $C_b$ buffer 1022, a $C_r$ buffer 1024, in the order Y, $C_b$, and $C_r$, and is transmitted to a post-processor 1050 in response to vertical and horizontal synchronizing signals generated in a display unit 1070. The post-processor 1050 converts 4:2:0 data into 4:2:2 data, converts the 4:2:2 format video data into 4:4:4 format RGB data and transmits the RGB data to the display unit 1070. Also, the post-processor 1050 accesses OSD data stored in an OSD buffer 1026, using a direct memory access (DMA) controller (not shown).

A system controlling unit 1040 transmits a control command of the central processing unit (CPU) 1060 to the hardware unit. If the CPU 1060 writes operation data into the register file and orders an operation for a hardware unit, the system controlling unit 1040 interprets the operation, thereby performing a command of the software unit according to each hardware unit and a predetermined protocol.

The CPU 1060 transmits a display command through a register to control the hardware unit. A DMA register 1030 performs an operation according to data that is received from the register of the CPU 1060 in response to the control command of the system controlling unit 1040 and the predetermined protocol.

Referring to Figure 11, a hardware unit divides a memory page (MP) into a plurality of smaller memory pages during initialization, sets an address in each memory page and stores automatically displayed video according to a predetermined order, if a display command is received from software unit. The memory pages are numbered 0 to 2 on the basis of a capture order, but may be increased if parallel processing or applications are used.

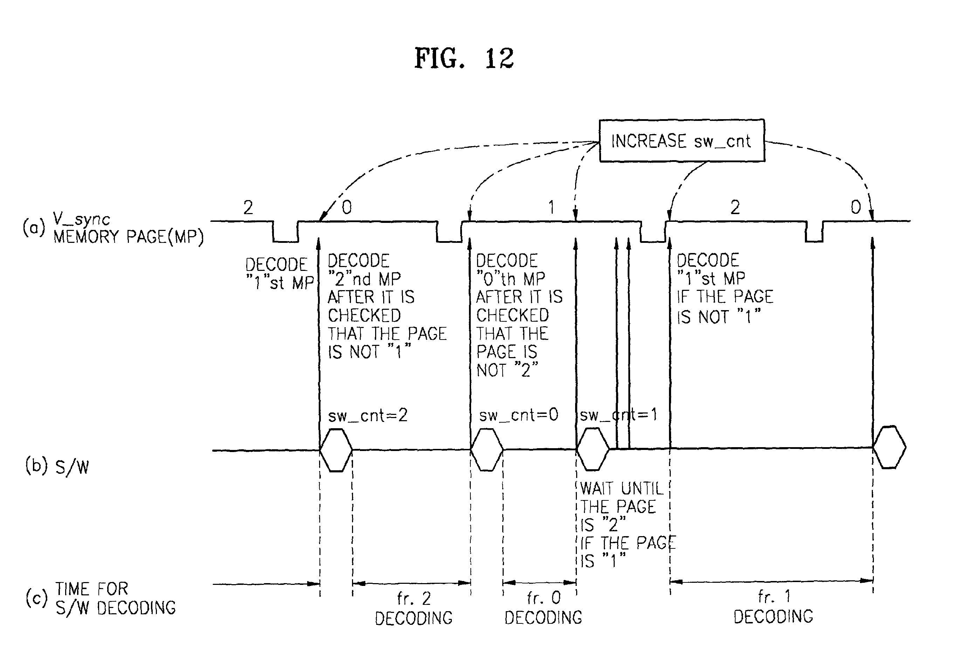

Referring to Figure 12, (a) is a timing diagram of a vertical synchronizing signal V_sync or a frame synchronizing signal, which is generated from a hardware unit, a memory page (MP) is updated in the order of "2 → 0 → 1 → 2 → 0 ... " in response to the V_sync. The MP is a ping-pong memory region that is displayed for one V_sync period while a liquid crystal display (LCD) begins displaying and finishes displaying. At this time, the hardware unit operates as a slave of the software unit for memory control and checks via a register whether an image is being displayed.

(b) is a timing diagram illustrating control performed in the software unit. The software unit reads the memory page displayed as shown in (a) and gives a display command. Software unit count value sw_cnt represents a memory page to be decoded and is cycled in the order "0 → 1 → 2 → 0 ... " after the displayed memory page has been read in response to a vertical synchronizing signal V_sync.è If the display command is not received, the last memory page is maintained. Referring to the timing diagram of (b), a displayed "0"th memory page is read, and then, it is checked that the memory page is not the "1"th memory page, and then, a "2"th memory page is decoded (sw_cnt = 2). Subsequently, a displayed "1"th memory page is read, and then, it is checked that the page is not the "2"th memory page, and then, the "0"th memory page is decoded (sw_cnt =0). Subsequently, if the software unit reads the displayed memory page, but the memory page is still the "1"th memory page, the software unit waits for until the page is the "2"th memory page (sw_cnt=1). Subsequently, the software unit reads the displayed "2"th memory page, and then, it is checked that the page is not the "1"th memory page, and the "1"th memory page is decoded (sw_cnt=1).

(c) is a timing diagram illustrating decoding performed by software unit. The software unit controls a hardware unit to decode a memory page corresponding to the software unit count value sw_cnt. That is, if the software unit determines that the displaying memory page is the same as the memory page to be decoded, the software unit waits without decoding. If not, the software unit decodes the corresponding memory page (fr. 0, fr. 1, fr. 2 decoding).

A video post-processing method according to the present invention will now be described.

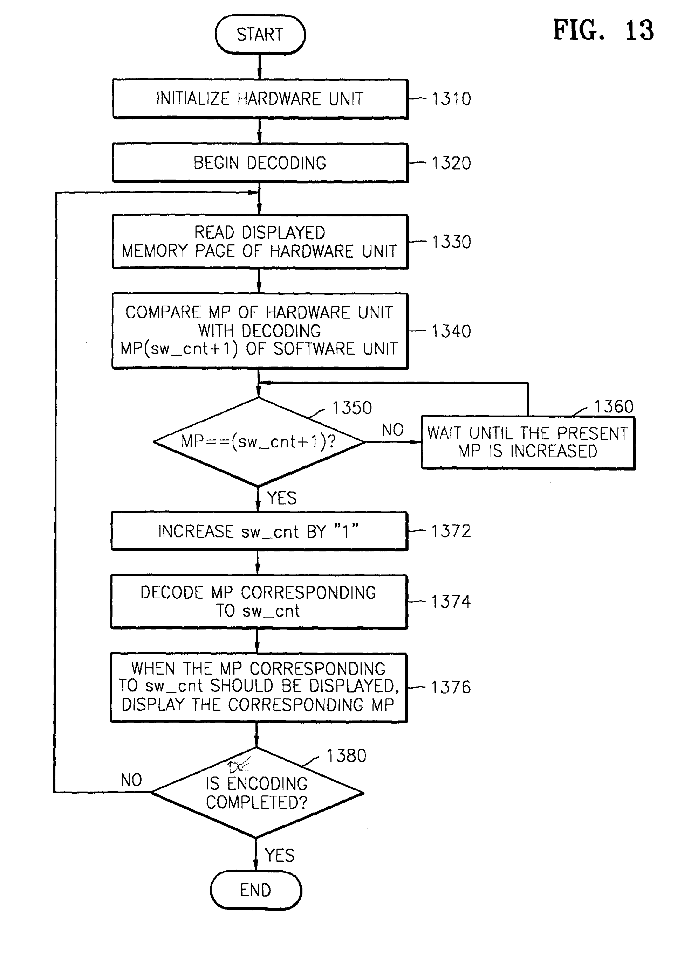

Referring to Figure 13, in step 1310, a hardware unit of a system is initialized, and then, in step 1320, the hardware unit begins decoding.

In step 1330, a software unit reads a displayed memory page (MP) from the hardware unit.

In steps 1340 and 1350, the software unit compares the value of the displayed memory page (MP) with an increased software unit count value sw_cnt+1.

If the memory page (MP) is the same as the increased software unit count sw_cnt+1, in step 1360, the software unit waits without decoding until the displaying memory page (MP) is increased.

In step 1372, if the memory page (MP) is not the same as that indexed by the increased software unit count value sw_cnt+1, the software unit count value sw_cnt is increased by "1", and in step 1374, the memory page corresponding to the count value sw_cnt is decided.

In step 1376, when the memory page corresponding to the software unit count value sw_cnt should be displayed, the corresponding memory page is displayed. Data from the memory page is displayed for one synchronizing signal cycle when at least two or more requests for display are made.

In step 1380, it is determined whether decoding is completed, and if decoding is completed, post-processing is ended. If not, the software unit performs post-processing by reading the memory page again.

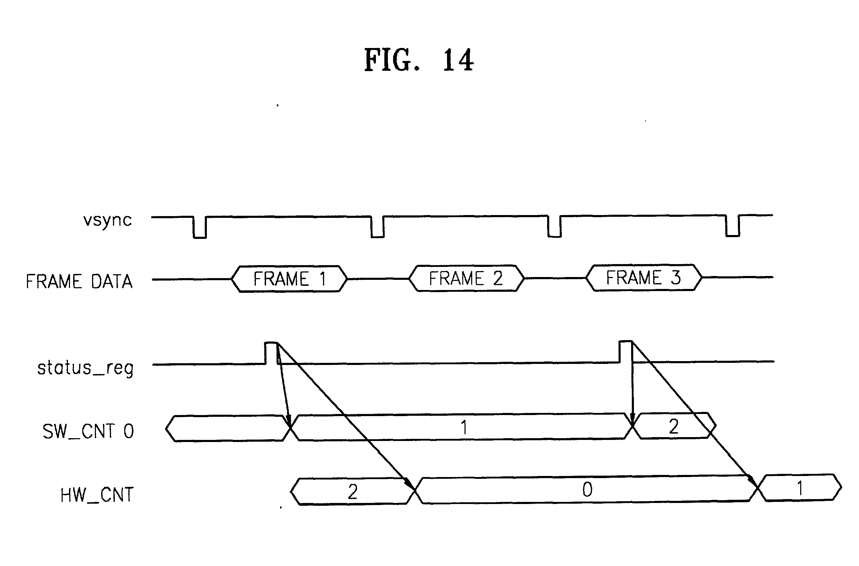

Referring to Figure 14, which is a timing diagram illustrating control of the memory of Figure 11, data read from a bus is stored in a region of the number (N) of memories for post processing. The software unit selects a memory region in which decoded video data is to be stored. The CPU 1060 monitors the state of the memory that is being read. In the case where the software unit updates the data in the memory region that is being displayed, an image division phenomenon occurs.

Post-processing is performed in response to a vertical synchronizing signal (Vsync) like pre-processing. Since there is no timing information in the software unit, the software unit selects the number (N) of memory region to be used when the data is stored in the memory the moment decoding is complete. The software unit reads the status register to determine the memory region and transmits information about the memory region to be displayed on the hardware unit via the register data. Predetermined status register bits are used as the register data. This means that the region for the display data is identified by a number, and the number is transmitted to the CPU 1060. The number is effective when the next updating of data due is not performed after the initial starting address of a number (N) of frames is set after booting. The CPU 1060 generates the starting address in units of vertical synchronizing signals (Vsync). A Y1 starting address, a Y2 starting address, and a Y3 starting address are mapped as 0, 1, and 2 in the memory region of Figure 11.

As shown in Figure 14, the CPU 1060 counts two values corresponding to a software unit count value sw_cnt, and a hardware count value hw_cnt using two bits of a status register status_reg. If decoding is complete, the software unit reads the hardware count value hw_cnt. Here, the software unit transmits numbers, which are not used in the hardware count value hw_cnt, to the hardware unit sequentially. The hardware unit increases the numbers linearly and transmits the numbers to the software unit. If the hardware unit cannot receive a count value from the software unit, data is read from the previous address, thereby causing an image holding phenomenon.

If a buffer is added, the software unit can decode two frames within an interval between vertical synchronizing signals (Vsync). First, the difference between the software unit count value sw_cnt and the hardware unit count value hw_cnt is maintained at two. If two frames are decoded in a Vsync interval, the difference between the two count values is decreased by one.

There is a number ($N_b$) of memory pages of a buffer in the present invention, and time required for decoding is delayed by one frame whenever the memory page of a buffer is increased by one. However, in the case where the software unit waits until the number of the memory page is increased as shown in (b) of Figure 12 (sw_cnt =1), a frame buffer is generated when a vertical synchronizing signal (V_sync) is generated, and thus, waiting time for decoding is decreased. If display exceeding a number ($1+N_b$) of memory pages is requested in a V_sync period, the software unit waits until an unrequested V_sync is generated. For example, if a number ($N_b$) of redundant buffers are generated, a total number ($N_b + 3$) of memory pages is generated. Here, $N_b$ must be consistent between a decoder and a display device. Three memory pages are included in Figure 11, but the number of the memory pages may be increased according to the number of buffers.

In the case of a decoder, display of a maximum number $(1+N_b)$ of memory pages can be requested within a V_sync period. If the number $(N_b)$ of memory pages (MPs) for a buffer is in a full state, only one display may be requested for a V_sync period. If the decoder cannot immediately request a driving unit to display data from the memory pages, decoding is delayed until the request is possible. The state of all display driving units is determined by the memory page of the hardware unit.

As described above, since the present invention operates without the waiting or interruptions of the conventional polling and interrupt methods, high speed and stable operation are possible. Further, a captured screen is always provided by request of a video encoder, and thus the image appears natural to the naked eye. Further, since only a capture command is given after most information related to capture are set during initialization, control can be simply performed.

Since there are few frames lost by a minimum memory while a displayed screen is always provided by request of a video decoder, the screen is naturally seen to the naked eye. Further, since only a display command is given after most information related to display are set during initialization, control can be simply performed, and a maximum 30 pages per second of display can be performed by a memory page for a buffer without delay of decoding processing.

**Claims**

1. A video encoding method comprising:

   cyclically storing video frames in a plurality of memory regions, and
   repeatedly performing a video encoding process on video data in said memory regions,

   **characterised in that**

   the video encoding process is performed substantially continuously,
   an index (MP) identifying the currently used memory region is updated in dependence on a frame synchronising signal (V_sync) associated with the video frames being stored in said memory regions, and
   at the end of each performance of said encoding process, one of said memory regions is selected to provide data for the next performance of said encoding process in dependence on the current value of said index.

2. A method according to claim 1, wherein the number of memory regions is greater than two.

3. A method according to claim 2, wherein said index (MP) is in the range 0 to N - 1, where N is the number of memory regions, and the index (sw_cnt) of the memory region to provide data for the next performance of said encoding process is determined in accordance with:

   $$sw\_cnt = (MP+N - 1)\ modulo\ N$$

4. A video encoding apparatus comprising:

   a video signal input;
   memory;
   video storing means for cyclically storing video frames from said video signal input in a plurality of regions of said memory, and
   encoding means for repeatedly performing a video encoding process on video data in said regions,

   **characterised in that**

   the encoding means is configured such that the video encoding process is performed substantially continuously,
   the video storing means is configured to update an index (MP), identifying the currently used memory region, in dependence on a frame synchronising signal (V_sync) associated with the video frames being stored in said memory regions, and
   the encoding means is configured such that, at the end of each performance of said encoding process, one of said memory regions is selected to provide data for the next performance of said encoding process in dependence on the current value of said index (MP).

5. An apparatus according to claim 4, wherein the number of said regions is greater than two.

6. A method according to claim 5, wherein said index (MP) is in the range 0 to N - 1, where N is the number of memory regions, and the index (sw_cnt) of the memory region to provide data for the next performance of said encoding process is determined in accordance with:

   $$sw\_cnt = (MP+N - 1)\ modulo\ N$$

7. A method of decoding an encoded video signal, the method comprising:

   cyclically storing encoded video frames in a plurality of memory regions,
   repeatedly performing a video decoding process on encoded video data in said memory regions, and

outputting decoded video frames in synchronism with a frame synchronising signal (V_sync),

**characterised in that**

an index (MP) identifying the memory region into which an encoded video frame is being written is updated in dependence on said frame synchronising signal (V_sync), and

after each performance of said decoding process, one of said memory regions is selected to provide data for the next performance of said decoding process in dependence on the current value of said index (MP), the decoding process being held off, if the index (MP) has not changed since the start of the last performance of the decoding process.

8. An apparatus for decoding an encoded video signal, the apparatus comprising:

a video signal input;
memory;
video storing means for cyclically storing encoded video frames in a plurality of memory regions,
decoding means for repeatedly performing a video decoding process on encoded video data in said memory regions, and
outputting decoded video frames in synchronism with a frame synchronising signal (V_sync),

**characterised in that**

the video storing means is configured to update an index (MP), identifying the memory region into which an encoded video frame is currently being written, in dependence on said frame synchronising signal, and

the decoding means is configured such that, after each performance of said decoding process, one of said memory regions is selected to provide data for the next performance of said decoding process in dependence on the current value of said index (MP), the decoding process being held off, if the index (MP) has not changed since the start of the last performance of the decoding process.

9. A video pre-processing method for capturing video efficiently, the method comprising the steps of:

(a) assigning numbers to a plurality of memory regions in order and circularly increasing the numbers in response to a frame synchronizing signal;

(b) checking the storing memory regions in response to the frame synchronizing signal and capturing input video data; and

(c) storing the captured video data in the memory regions in a predetermined order.

10. The video pre-processing method claimed in claim 9, wherein the video data are captured in predetermined units.

11. The video pre-processing method claimed in claim 9, wherein the video data are captured by a capture command which is received in units of synchronization of a frame or in units of synchronization of several frames through a register.

12. The video pre-processing method claimed in claim 9, wherein the video signal is captured, stored in a predetermined region of a memory and the region of a stored memory is transmitted in step (c).

13. The video pre-processing method claimed in claim 9, wherein the starting address of the memory for storing the captured data is an address of a memory region after booting.

14. The video pre-processing method claimed in claim 13, wherein the starting address of the memory is effective until the next address update is permitted.

15. The video pre-processing method claimed in claim 13, wherein the starting address of the memory is used in units of synchronization of a frame or in units of synchronization of several frames.

16. The video pre-processing method claimed in claim 9, wherein the memory region in which data are stored is divided into a plurality of regions, and addresses corresponding to the respective plurality of regions are set.

17. A video pre-processing method comprising the steps of:

(a) numbering a plurality of memory regions in order;
(b) circularly checking the number of the memory regions in response to a frame synchronizing signal, generating a capture command in the memory regions, and calculating a memory region to be encoded; and
(c) encoding data of the calculated memory region.

18. The video pre-processing method claimed in claim 17, wherein the previous frame is re-encoded if the memory region checked after encoding is completed is the same as the memory region to be encoded.

**19.** The video pre-processing method claimed in claim 17, wherein the memory region to be encoded is calculated by (MP+k) modulo N, where MP is memory page, k=N-1, and N is the number of the region.

**20.** The video pre-processing method claimed in claim 17, wherein the number of a memory page is ($N_p$+2) and the memory region to be encoded according to the number of the memory page is calculated by (MP+k) modulo N, where k=N-1, and N is the number of the region if a memory required for parallel capture processing is $N_p$.

**21.** A video pre-processing apparatus for capturing video efficiently, the apparatus comprising:

a memory unit divided into a plurality of regions each of which is assigned numbers;
a software unit for generating a capture command in a memory region to be used at next time after a region used in the memory unit is checked whenever a video synchronizing signal is generated; and
a hardware unit for circularly increasing the numbers of the regions of the memory unit in response to a frame synchronizing signal, capturing a received video signal in response to a capture command received from the software unit, and storing the video signal in the memory region in a predetermined order.

**22.** The video pre-processing apparatus claimed in claim 21, wherein the software unit is a means for setting a capture command in a register file.

**23.** A video post-processing method for displaying video efficiently, the method comprising the steps of:

(a) assigning numbers to a plurality of memory regions in order and circularly increasing the numbers in response to a frame synchronizing signal;
(b) displaying the memory regions in response to a video synchronizing signal, checking the displayed memory regions, and storing video data in the memory regions in a predetermined order; and
(c) sequentially displaying the video data stored in the memory region.

**24.** The video post-processing method claimed in claim 23, wherein the video data are displayed in predetermined units.

**25.** The video post-processing method claimed in claim 23, wherein the video data are displayed by a display command that is received in units of synchronization of a frame.

**26.** The video post-processing method claimed in claim 23, further comprising the step of transmitting the position of the displayed memory region after the video data are displayed.

**27.** The video post-processing method claimed in claim 23, wherein the starting address of the memory to be displayed is set by an address of a set memory region after booting.

**28.** The video post-processing method claimed in claim 27, wherein the starting address of the set memory is effective until the next address update is permitted.

**29.** The video post-processing method claimed in claim 27, wherein the starting address of the memory is used in units of synchronization of a frame.

**30.** The video post-processing method claimed in claim 23, wherein the memory region in which data are stored is divided into a plurality of regions, and addresses corresponding to the respective plurality of regions are set.

**31.** A video post-processing method comprising the steps of:

(a) numbering a plurality of memory regions in an order to be displayed;
(b) increasing the address of memory region to be decoded in order after numbers of the displaying memory regions are read in response to a frame synchronizing signal; and
(c) decoding the memory regions in the step (b) and displaying the decoded memory regions.

**32.** The video post-processing method claimed in claim 31, wherein the next screen is displayed if the displayed memory regions are different from the decoded memory regions.

**33.** The video post-processing method claimed in claim 32, wherein the next screen is displayed when at least two or more requests for display are made for a predetermined amount of time of a synchronizing signal.

**34.** The video post-processing method claimed in claim 33, wherein requests for display of a number (1+N) of memory regions are made for a predetermined amount of time of a synchronizing signal if the number of memory region is N.

**35.** The video post-processing method claimed in claim 33 or 34, wherein display is not performed until an unrequested synchronizing signal is input when requests for display exceeding the number (1+N) of memory regions are made for a predetermined amount of time of the synchronizing signal.

**36.** The video post-processing method claimed in claim 31, wherein the decoding is not performed if the displayed memory regions are the same as the decoded memory regions.

**37.** A video post-processing apparatus for displaying video efficiently, the apparatus comprising:

a memory unit divided into a plurality of regions each of which are assigned numbers;
a software unit for comparing the number of displayed memory regions in response to a video synchronizing signal with the number of decoded memory regions and generating a display command of video data; and
a hardware unit for circularly increasing the numbers of the regions of the memory unit in response to a frame synchronizing signal and displaying a screen in a predetermined order of the memory unit in response to a display command generated in the software unit.

**38.** The apparatus as claimed in claim 37, wherein the software unit is a means for setting a display command in a register.

# FIG. 1 (PRIOR ART)

# FIG. 2 (PRIOR ART)

## FIG. 3

## FIG. 4

MEMORY PAGE(MP)

CAPTURE ORDER

# FIG. 5

(a) V_sync
MEMORY PAGE(MP)

| 0 | 1 | 2 | 0 | 1 |

ENCODE "0"th MEMORY PAGE AFTER READING MP AND CHECKING IT

ENCODE "1"st MEMORY PAGE AFTER READING MP AND CHECKING IT

RE-ENCODE "1"st MEMORY PAGE IF CAPTURING OF "2"nd MEMORY PAGE IS NOT COMPLETED

ENCODE "2"nd MEMORY PAGE AFTER READING MP AND CHECKING IT

sw_cnt=0          sw_cnt=1          sw_cnt=1          sw_cnt=2

(b) S/W

(c) TIME FOR S/W ENCODING

fr. 0 ENCODING    fr. 1 ENCODING    fr. 1 ENCODING    fr. 2 ENCODING

EP 1 251 702 A2

# FIG. 6

```
        ┌─────────┐
        │  START  │
        └─────────┘
             │
             ▼
   ┌────────────────────────┐
   │  INITIALIZE HARDWARE   │──── 610
   └────────────────────────┘
             │
   ┌─────────▼──────────────┐
   │    BEGIN ENCODING      │──── 620
   └────────────────────────┘
             │
             ▼
   ┌────────────────────────┐
   │  READ MEMORY PAGE OF   │──── 630
   │     HARDWARE UNIT      │
   └────────────────────────┘
             │
             ▼
   ┌────────────────────────┐
   │   COMMAND THE MP       │──── 640
   │     TO CAPTURE         │
   └────────────────────────┘
             │
             ▼
   ┌────────────────────────┐
   │ CALCULATE MEMORY PAGE  │──── 650
   │    TO BE ENCODED       │
   └────────────────────────┘
             │
             ▼
   ┌────────────────────────┐
   │  ENCODE CALCULATED     │──── 660
   │     MEMORY PAGE        │
   └────────────────────────┘
             │
             ▼
         ╱────────╲         670
   NO  ╱ IS ENCODING ╲
  ◄────  COMPLETED?   
        ╲           ╱
         ╲─────────╱
             │ YES
             ▼
        ┌─────────┐
        │   END   │
        └─────────┘
```

# FIG. 7

# FIG. 8

EP 1 251 702 A2

# FIG. 9

# FIG. 10

```
           ┌─1010              ┌─1030              ┌─1040
        ┌──────────┐       ┌──────────┐       ┌──────────┐
        │ BUFFER   │       │   DMA    │       │  SYSTEM  │
  ◄───► │CONTROLLING│ ◄─── │ REGISTER │ ◄───► │CONTROLLING│
        │   UNIT   │       │          │       │   UNIT   │
        └──────────┘       └──────────┘       └──────────┘
```

BUFFER CONTROLLING UNIT 1010

DMA REGISTER 1030

SYSTEM CONTROLLING UNIT 1040

Y BUFFER 1020

Cb BUFFER 1022

Cr BUFFER 1024

OSD BUFFER 1026

CPU 1060

POST-PROCESSOR 1050

DISPLAY UNIT 1070

# FIG. 11

MEMORY PAGE(MP)

| 0 |
|---|
| 1 |
| 2 |

DISPLAY ORDER

# FIG. 12

(a) V_sync MEMORY PAGE(MP)

2     0     1     2     0

INCREASE sw_cnt

DECODE "1"st MP

DECODE "2"nd MP AFTER IT IS CHECKED THAT THE PAGE IS NOT "1"

DECODE "0"th MP AFTER IT IS CHECKED THAT THE PAGE IS NOT "2"

DECODE "1"st MP IF THE PAGE IS NOT "1"

(b) S/W

sw_cnt=2     sw_cnt=0     sw_cnt=1

WAIT UNTIL THE PAGE IS "2" IF THE PAGE IS "1"

(c) TIME FOR S/W DECODING

fr. 2 DECODING     fr. 0 DECODING     fr. 1 DECODING

EP 1 251 702 A2

**FIG. 13**

```
        ( START )
            │
            ▼
┌───────────────────────────┐
│  INITIALIZE HARDWARE UNIT  │──── 1310
└───────────────────────────┘
            │
            ▼
┌───────────────────────────┐
│      BEGIN DECODING        │──── 1320
└───────────────────────────┘
            │
            ▼
┌───────────────────────────┐
│      READ DISPLAYED        │
│ MEMORY PAGE OF HARDWARE UNIT│──── 1330
└───────────────────────────┘
            │
            ▼
┌───────────────────────────┐
│ COMPARE MP OF HARDWARE UNIT│
│       WITH DECODING        │──── 1340
│ MP(sw_cnt+1) OF SOFTWARE UNIT│
└───────────────────────────┘
            │
            ▼
        1350
      ╱        ╲                    NO    ┌──────────────────────┐
     ╱ MP==(sw_cnt+1)? ╲──────────────────│ WAIT UNTIL THE PRESENT│── 1360
      ╲        ╱                          │   MP IS INCREASED     │
        ╲    ╱                            └──────────────────────┘
          │ YES
          ▼
┌───────────────────────────┐
│   INCREASE sw_cnt BY "1"   │──── 1372
└───────────────────────────┘
            │
            ▼
┌───────────────────────────┐
│   DECODE MP CORRESPONDING  │
│         TO sw_cnt          │──── 1374
└───────────────────────────┘
            │
            ▼
┌───────────────────────────┐
│ WHEN THE MP CORRESPONDING  │
│ TO sw_cnt SHOULD BE DISPLAYED,│── 1376
│  DISPLAY THE CORRESPONDING MP │
└───────────────────────────┘
            │
            ▼
           1380
   NO     ╱      ╲
 ◄───────╱ IS ENCODING ╲
         ╲ COMPLETED?   ╱
          ╲          ╱
             │ YES
             ▼
          ( END )
```

# FIG. 14

EP 1 251 702 A2